# EUROPÄISCHE PATENTSCHRIFT

(11) **EP 1 336 440 B1**
(45) Veröffentlichungstag und Bekanntmachung des Hinweises auf die Patenterteilung: **03.03.2010**
(21) Anmeldenummer: 03001584.6
(22) Anmeldetag: 24.01.2003
(51) Int. Cl.: B21D 43/05, B23Q 16/02, B23Q 5/36, B23Q 5/34

(54) **Vorrichtung zum Vorschieben von Werkstücken mit Greiferschienen**
Driver device for workpieces with transfer bars
Dispositif pour le mouvement des pièces avec des barres d'amenage

(30) Priorität: 19.02.2002 DE 10206773
(43) Veröffentlichungstag der Anmeldung: 20.08.2003
(73) Patentinhaber: Erdrich Beteiligungs GmbH, 77871 Renchen-Ulm (DE)
(72) Erfinder: Zeibig, Uwe, 77855 Achern (DE); Nock, Klemens, 77704 Oberkirch (DE)
(74) Vertreter: Maucher, Wolfgang

(56) Entgegenhaltungen:
- EP-A- 0 633 077
- DE-A- 2 740 211
- US-B1- 6 216 523

## Beschreibung

Die Erfindung betrifft eine Vorrichtung zum schrittweisen Vorschieben von Werkstücken mit zwei in Vorschubrichtung hin- und herbewegbaren, Greiferteile oder Greiferbereiche zum Erfassen der Werkstücke aufweisenden Greiferschienen, die zum Erfassen der Werkstücke und zum Bewegen in Vorschubrichtung bewegbar sind und anschließend wieder in Ausgangsstellung verstellbar sind, wobei an jeder Greiferschiene wenigstens zwei parallel zueinander in der Bewegungsebene der Greiferschiene oder einer dazu parallelen oder spiegelsynchronischen Ebene verschwenkbare und zueinander beabstandete Hebel angreifen und wobei diese Hebel der einen Greiferschiene gegensinnig zu denen der anderen Greiferschiene verschwenkbar und jeweils über eine in Orientierungsrichtung der Greiferschienen verlaufende Längsführung mit diesen gekuppelt sind; wobei für die Vorschub- und Rücklaufbewegung an den Greiferschienen außerhalb ihrer Greifbereiche wenigstens eine quer zu sich selbst bewegbare Vorschubtraverse direkt oder indirekt angreift.

Eine derartige Vorrichtung ist aus EP 0 633 077 B1 bekannt, kann zum Beispiel wie in DE 100 19 109 A1 beschrieben an Umformpressen angewandt werden und hat sich bewährt, da vor allem auch im Greifbereich eine geringe Bauhöhe und eine platzsparende Anordnung ermöglicht wird und die Synchronisierung der Bewegungen der Hebel einfach ist. Allerdings bedarf die Synchronisierung der Bewegungen der Hebel bei dieser vorbekannten Vorrichtung einer mechanischen Verbindung und die Greiferschienen sind in ihrer Längserstreckungsrichtung an einer Zug- und/oder Schubstange geführt, welche diese mechanische Verbindung bewirkt und für eine synchrone Bewegung der Hebel sorgt. Für den gemeinsamen Vorschub ist außerdem eine relativ aufwendige Getriebekonstruktion erforderlich, damit die Greifbewegungen und die Vorschubbewegungen sowie die Rückzugsbewegungen zeitlich aufeinander abgestimmt sind.

Aus der US-B1-6 216 523 ist es bekannt, die Bewegungseinrichtungen einer Vorrichtung zum schrittweisen Vorschieben von Werkstücken mit Schwenkhebeln anzutreiben und als Antrieb für die Schwenkhebel Servomotoren vorzusehen. Die Schwenkbewegungen erfolgen dabei in vertikalen Ebenen und müssen deshalb über eine Verbindungsstange und über mit Langlochführungen versehene Übertragungselemente auf die Greiferschienen übertragen werden, was ein relativ großer maschineller Aufwand ist.

Es besteht deshalb die Aufgabe, eine Vorrichtung der eingangs genannten Art mit einem Antrieb zu schaffen, bei welchem der maschinelle Aufwand vermindert ist.

Zur Lösung dieser Aufgabe ist die eingangs definierte Vorrichtung dadurch gekennzeichnet, dass mit der Vorschubtraverse wenigstens ein angetriebener Schwenkhebel verbunden ist, dessen Schwenkbewegung in eine Vorschubbewegung der Vorschubtraverse quer zu sich selbst und damit in eine Vorschubbewegung der Greiferschienen sowie in eine jeweilige Rücklaufbewegung umsetzbar ist, wobei die Angriffsstelle des Schwenkhebels an einer in Orientierungsrichtung der Vorschubtraverse verlaufenden Längsführung verschiebbar angreift, dass als Antrieb für die Schwenkbewegung ein Servomotor vorgesehen ist, dass Mittel vorgesehen sind, um die Vorschubbewegung der Vorschubtraverse quer oder parallel zu sich selbst zu führen, dass die die Greiferschienen beaufschlagenden Hebel als Antrieb für ihre Schwenkbewegungen jeweils einen Servomotor aufweisen und dass die Servomotoren der schwenkbaren Hebel für die Greiferschienen und des oder der Schwenkhebel für die Vorschubtraverse einen ihre Schwenkbewegungen aufeinander abstimmende gemeinsame Steuerung haben.

Durch Servomotoren können mechanische Übertragungsmittel wie Getriebe, Kurvenscheiben und dergleichen, also beträchtliche, bei der Betätigung der Vorrichtung zu beschleunigende und abzubremsende Massen eingespart werden. Darüber hinaus ist der maschinelle Aufwand erheblich vermindert. Durch die Verwendung von Servomotoren für den Antrieb mehrerer oder möglichst aller Hebel und Schwenkhebel kann also die Abstimmung der einzelnen Bewegungen aufeinander mittels einer zweckmäßigerweise elektrischen oder elektronischen, auch programmierbaren Steuerung durchgeführt werden, was einen erheblich geringeren maschinellen Aufwand als eine mechanische Abstimmung über ein Getriebe erfordert.

Eine zweckmäßige Ausgestaltung der Erfindung kann darin bestehen, dass zur Führung der Vorschub- und Rücklaufbewegung der Traverse quer zu sich selbst zumindest eine mechanische Führung, beispielsweise wenigstens eine Führungsnut, ein Führungsprofil, eine Führungsschiene oder eine Führungsstange vorgesehen ist, an der wenigstens ein an der Vorschubtraverse vorhandenes oder mit der Traverse verbundenes Führungsstück oder Führungselement angreift, oder dass an der Vorschubtraverse zumindest eine quer zu deren Erstreckung verlaufende Führung vorgesehen ist, die mit wenigstens einem feststehenden Führungsstück oder Führungselement zusammenwirkt. Bevorzugt sind dabei zwei parallele Führungsschienen oder Führungsstangen. Dadurch kann erreicht werden, dass ein einziger von einem Servomotor angetriebener Schwenkhebel ausreicht, um die Vorschubtraverse quer zu sich selbst zu verstellen und dadurch die Vorschub- und Rücklaufbewegung der Greiferschienen zu bewirken.

Eine bevorzugte Ausführungsform der Erfindung kann dadurch gekennzeichnet sein, dass als Mittel zum Führen der Vorschubtraverse quer oder parallel zu sich selbst an dieser ein mit einem Servomotor angetriebener zweiter Schwenkhebel etwa spiegelsymmetrisch zu dem erstgenannten Schwenkhebel und mit übereinstimmender Abmessung angreift, dessen Schwenkbewegung zusammen mit dem ersten Schwenkhebel in die Vorschub- und Rücklaufbewegung einer jeweiligen oder der gemeinsamen Vorschubtraverse und der Greiferschienen umsetzbar ist, wobei die Angriffsstelle dieses zweiten Schwenkhebels ebenfalls verschiebbar an einer in Orientierungsrichtung der zugehörigen Vorschubtraverse verlaufenden Längsführung angreift. Ähnlich wie die Greiferschienen selbst mittels etwa spiegelsymmetrisch zueinander angeordneten Hebeln synchron aufeinander zu und voneinander weg bewegt werden können, können sie also auch über eine gemeinsame oder gegebenenfalls zwei getrennte Vorschubtraversen und zwei gegensinnig daran angreifenden, gleich großen und mittels Servomotoren angetriebenen Schwenkhebeln in Vorschub- und Rücklaufrichtung verstellt werden. Dies ergibt eine vom maschinellen Aufwand einfache Konstruktion mit wenigen zu beschleunigenden Teilen. Für eine präzise Verstellung kann auch in diesem Fall zusätzlich eine mechanische Führung vorgesehen sein.
Die Abtriebswelle des Servomotors kann dabei mit der Schwenkachse des oder der Schwenkhebel jeweils direkt gekuppelt sein oder diese - insbesondere einstückig - bilden. Die Bewegung des Servomotors kann also dadurch unmittelbar in die Schwenkbewegung des jeweiligen Schwenkhebels umgesetzt werden, so dass es für die Verstellung der Vorschubtraverse keiner zusätzlichen Übersetzungen oder Kräftübertragungen bedarf. Entsprechend gering ist der maschinelle Aufwand.

Die Vorschubtraverse kann quer zu den Greiferschienen an oder durch diese verlaufende Führungsaussparungen oder Führungsöffnungen durchsetzen und die Greiferschienen können bei ihren Öffnungs- und Schließbewegungen in Längsrichtung der Vorschubtraverse quer zu dieser relativ bewegbar sein. Auf diese Weise können die Greiferschienen Ihre Öffnungs- und Schließbewegungen durchführen und dennoch mit Hilfe der Vorschubtraverse auch in Vorschubrichtung und entgegengesetzt dazu verstellt werden.

Eine abgewandelte oder gegebenenfalls zusätzliche Ausführungsform kann vorsehen, dass zur Koppelung der Vorschubtraverse mit den Greiferschienen an der Vorschubtraverse in deren Orientierungsrichtung beispielsweise in Langlochungen verschiebbare Führungsfinger oder dergleichen angeordnet sind, die sich von der Vorschubtraverse aus in Gegenausnehmungen der Greiferschienen erstrecken.

Dadurch wird eine weitere Ausgestaltung dahingehend möglich, dass die schwenkbaren Hebel zum Bewegen der Greiferschienen ober- und/oder unterhalb der Greiferschienen und die Vorschubtraverse sowie deren Schwenkhebel unter- und/oder oberhalb der Greiferschienen angeordnet sind, da letztere sich außerhalb der Greifbereiche und damit auch außerhalb von Pressewerkzeugen befinden.

Günstig kann es sein, wenn die Servomotoren der schwenkbaren Hebel und der oder die Servomotoren des oder der Schwenkhebel eine zeitlich aufeinander abstimmende gemeinsame Steuerung haben.

Die schwenkbaren Hebel und die Schwenkhebel können jeweils mit ihren schwenkbaren Enden an Gleitsteinen angreifen, die in Langlochungen an den Greiferschienen beziehungsweise an der Vorschubtraverse verschiebbar und geführt eingreifen. Dies ergibt eine direkte und zweckmäßige Verbindung der schwenkbaren Hebel beziehungsweise der Schwenkhebel mit nur in gerader Richverstellbaren Teilen, so dass die Schwenkbewegungen praktisch ungehindert in entsprechende geradlinige Bewegungen umgesetzt werden können.

Vor allem bei Kombination einzelner oder mehrerer der vorbeschriebenen Merkmale und Maßnahmen ergibt sich eine Vorrichtung der eingangs definierten Art, bei welcher bisher erforderliche mechanische Übertragungsmittel wie Getriebe und Kurvenscheiben, also auch beträchtliche, bei der Betätigung der Vorrichtung zu beschleunigende und abzubremsende Massen eingespart werden können.

Nachstehend sind Ausführungsbeispiele der Erfindung anhand der Zeichnung näher beschrieben.

Es zeigt in schematisierter Darstellung:

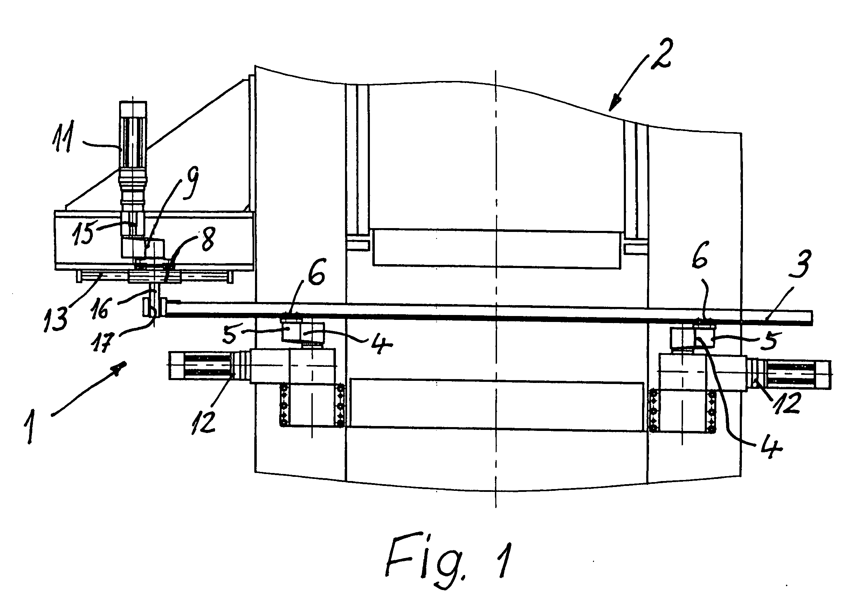

- Fig.1: eine Ansicht einer nur teilweise dargestellten, im übrigen abgebrochen gezeichneten Presse, an welcher eine erfindungsgemäße Vorrichtung zum schrittweisen Vorschieben von Werkstücken angeordnet ist, die dabei in Seitenansicht dargestellt ist, wobei der zum Erfassen von Werkstücken dienende Teil der Greiferschienen innerhalb der Presse und ein Antrieb für den Vorschub der Greiferschienen außerhalb der Presse an dieser befestigt vorgesehen sind,

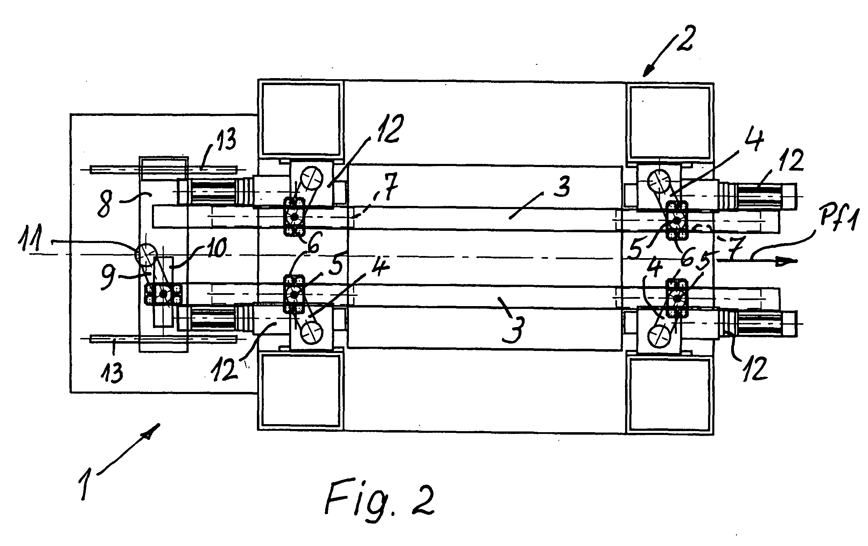

- Fig.2: eine Draufsicht der Anordnung gemäß Fig.1, wobei Ständer der Presse oder dergleichen Bearbeitungsmaschine im Querschnitt erkennbar sind, und schwenkbare Hebel für die Bewegungen der Greiferschienen an diesen Ständern gelagert und für den Vorschub und die Rückzugsbewegung der Greiferschienen ebenfalls ein Schwenkhebel vorgesehen sind,

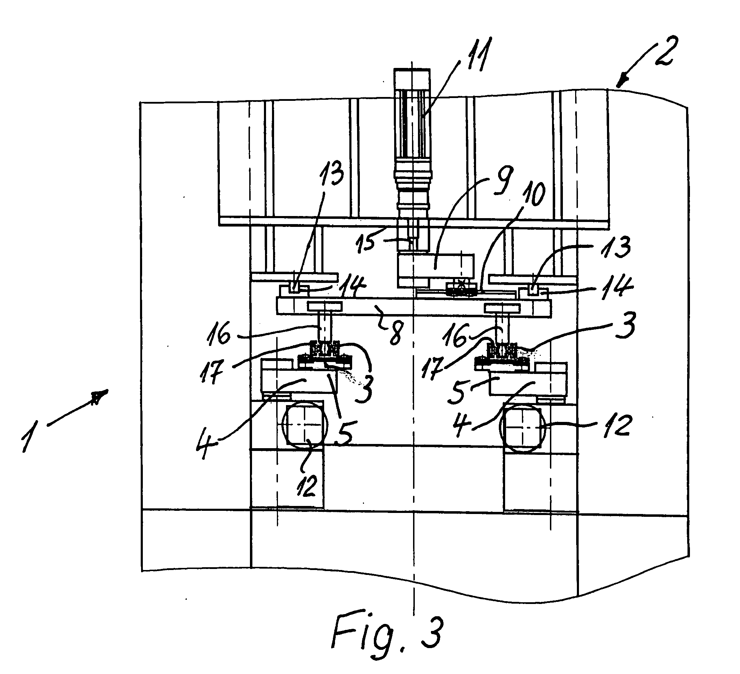

- Fig.3: eine Stirnansicht der Anordnung gemäß Fig.1 und 2 etwa in Vorschubrichtung mit Blick auf einen von einem Servomotor angetriebenen Schwenkhebel und eine von diesem beaufschlagte Vorschubtraverse zum Verschieben der Greiferschienen in deren Längserstreckungsrichtung,

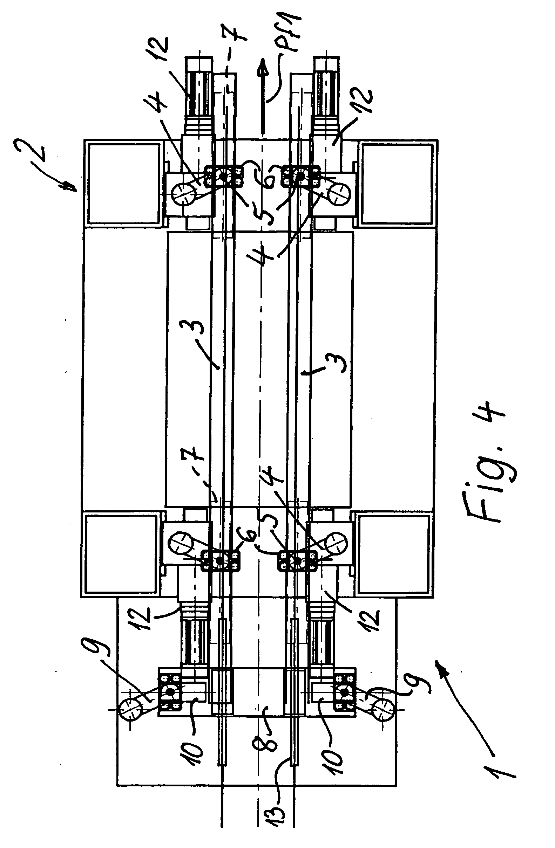

- Fig.4: eine der Fig.2 entsprechende Darstellung mit zwei jeweils von einem Servomotor angetriebenen Schwenkhebel, die an einer gemeinsamen Vorschubtraverse zum Verstellen der Greiferschienen in deren Längserstreckungsrichtung angreifen und dabei gleich groß bemessen aber spiegelsymmetrisch zur Längsmittelebene zwischen den Greiferschienen angeordnet sind, sowie

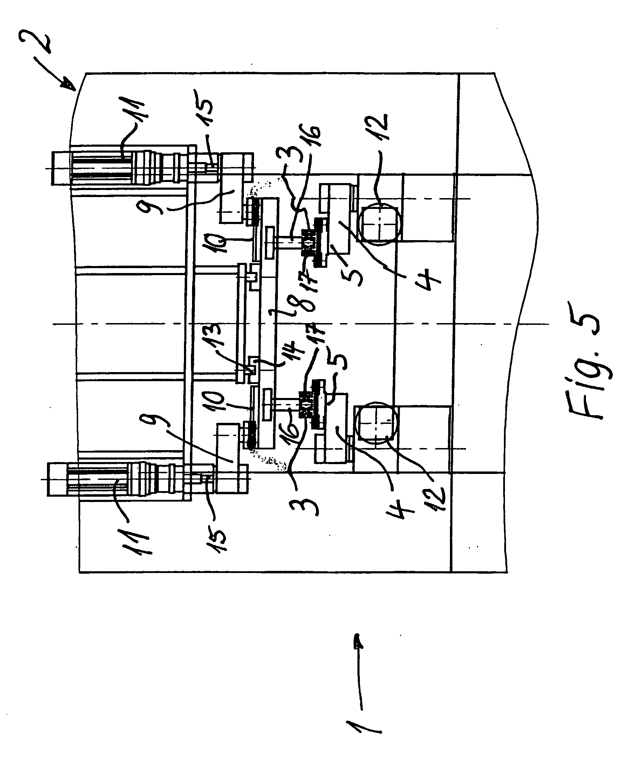

- Fig.5: eine der Fig.3 entsprechende Darstellung mit Blick auf die beiden spiegelsymmetrisch angeordneten, an einer gemeinsamen Vorschubtraverse angreifenden, jeweils von einem Servomotor angetriebenen Schwenkhebel.

In den nachfolgend beschriebenen Ausführungsbeispielen sind übereinstimmende oder bezüglich ihrer Funktion übereinstimmende Teile auch bei unterschiedlicher konstruktiver Gestaltung jeweils mit übereinstimmenden Bezugszahlen versehen.

Eine im Ganzen mit 1 bezeichnete Vorrichtung dient zum schrittweisen Vorschieben von Werkstücken, beispielsweise innerhalb einer nur teilweise dargestellten Presse 2, in welcher die Werkstücke nach jeweils einer Vorschubbewegung beziehungsweise einem Vorschubschritt einem zusätzlichen Bearbeitungsvorgang unterworfen werden.

Die Vorrichtung 1 weist dazu zwei parallele, in Vorschubrichtung gemäß dem Pfeil PF1 in Fig. 2 und Fig. 4 bewegbare und wieder zurückziehbare Greiferschienen 3 auf, an denen in nicht näher dargestellter, aber bekannter Weise Greiferteile oder Greiferbereiche zum Erfassen der Werkstücke vorgesehen sind.

Zum Erfassen solcher Werkstücke sind die Greiferschienen 3 aufeinander zu und zum Freigeben wieder voneinander wegbewegbar, das heißt die Greiferschienen 3 machen jeweils vier Bewegungen, nämlich eine Greifbewegung, bei welcher die Greiferschienen 3 aufeinander zu bewegt werden, eine Vorschubbewegung in Richtung des Pfeils PF1, eine der Greifbewegung entgegengesetzte Öffnungsbewegung und eine der Vorschubbewegung entgegengesetzte Rücklaufbewegung in ihre Ausgangsposition. Dabei sind die Greiferschienen 3 abwechselnd zum Erfassen der Werkstücke aufeinander zu und zum Vorschieben gemeinsam in Vorschubrichtung bewegbar und anschließend wieder voneinander weg und schließlich gemeinsam in Ausgangsstellung zurück verstellbar.

Für diese unterschiedlichen Bewegungen greifen an jeder Greiferschiene 3 die verschwenkbaren Enden 5 oder Endbereiche von jeweils zwei spiegelsynchron zueinander in der Bewegungsebene der Greiferschienen oder in einer dazu parallelen Ebene verschwenkbaren Hebeln 4 an, wie es vor allem in Fig. 3 und 5, aber auch in den übrigen Figuren angedeutet ist.

Die Hebel 4 der einen Greiferschiene 3 sind dabei gegensinnig zu denen der anderen Greiferschiene 3 verschwenkbar, um die beiden Greiferschienen 3 abwechselnd aufeinander zu und voneinander weg zu bewegen. Damit diese Bewegungen weitgehend unabhängig von der Vorschubbewegung durchgeführt werden können, sind die Hebel 4 jeweils über ein Gleitelement 6 an einer Längsführung 7 der Greiferschienen 3 angekuppelt. Somit können die Greiferschienen 3 auch relativ zu den Anlenkstellen der Enden 5 der Hebel 4 in Vorschubrichtung oder entgegengesetzt dazu verschoben werden, wie es auch in EP 0 633 077 B1 beschrieben ist.

Für die gemeinsame Vorschub- und Rücklaufbewegung der Greiferschienen 3 ist in beiden Ausführungsbeispielen eine an den Greiferschienen 3 in noch zu beschreibender Weise außerhalb ihrer Greifbereiche angeordnete, quer zu sich selbst bewegbare Vorschubtraverse 8 vorgesehen, die dabei mit den Greiferschienen 3 direkt oder indirekt verbunden sein kann.

Mit dieser Vorschubtraverse 8 ist gemäß dem Ausführungsbeispiel nach Fig. 2 und 3 ein angetriebener Schwenkhebel 9 und gemäß dem Ausführungsbeispiel nach Fig. 4 und 5 zwei derartige Schwenkhebel 9 verbunden, deren Schwenkbewegung in noch zu beschreibender Weise in eine Vorschubbewegung der Vorschubtraverse 8 quer beziehungsweise parallel zu sich selbst und damit in eine Vorschubbewegung der Greiferschienen 3 sowie in eine jeweilige Rücklaufbewegung umsetzbar ist. Die Angriffsstelle des oder der Schwenkhebel 9 greift dabei verschiebbar an einer in Orientierungsrichtung der Vorschubtraverse 8 verlaufenden Längsführung 10 verschiebbar an, wobei außerdem noch zu beschreibende Mittel vorgesehen sind, um die Vorschubbewegung der Vorschubtraverse 8 quer oder parallel zu sich selbst zu führen.

Als Antrieb für die Schwenkbewegung des oder der Vorschubtraverse 8 beaufschlagenden Schwenkhebel 9 ist dabei jeweils ein Servomotor 11 vorgesehen, wie auch zum Antrieb der schwenkbaren Hebel 4 Servomotoren 12 dienen.

Für die bereits erwähnte Führung der Vorschub- und Rücklaufbewegung der Vorschubtraverse 8 quer zu sich selbst ist in beiden Ausführungsbeispielen eine mechanische Führung vorgesehen, die dabei aus einer in Vorschubrichtung orientierten Führungsstange 13 und einer diese aufnehmenden Führungsnut 14 gebildet ist, wobei im Ausführungsbeispiel nach Fig. 2 und 3 diese mechanische Führung in den Endbereichen der Vorschubtraverse 8, im Ausführungsbeispiel nach den Figuren 4 und 5 aber mehr im Mittelbereich der Vorschubtraverse 8 angeordnet sind.

Gegenüber der Ausführungsform nach Fig.2 und 3 könnte als alleiniges Mittel zum Führen der Vorschubtraverse 8 quer oder parallel zu sich selbst aber auch der im Ausführungsbeispiel nach Fig.3 und 4 vorgesehene, mit einem Servomotor 11 angetriebene zweite Schwenkhebel 9 dienen, der etwa spiegelsymmetrisch zu dem ersten Schwenkhebel 9 und mit übereinstimmender Abmessung an der Vorschubtraverse 8 angreift. Im Ausführungsbeispiel nach Fig.4 und 5 sind zwei derartige Schwenkhebel 9 jeweils mit einem Servomotor 11 als Antrieb vorgesehen, deren spiegelsymmetrische Schwenkbewegungen in die schon beschriebene Vorschub- und Rücklaufbewegung der gemeinsamen Vorschubtraverse 8 und damit der davon beaufschlagten Greiferschienen 3 umsetzbar ist, wobei die Angriffsstelle dieser Schwenkhebel 9 verschiebbar an in Orientierungsrichtung der Vorschubtraverse 8 verlaufenden Längsführungen 10 angreifen. Zusätzlich ist aber für eine präzise Bewegung auch in diesem Falle die schon beschriebene mechanische Führung vorgesehen.

Es sei noch erwähnt, dass bei der Anwendung zweier Schwenkhebel 9 auch für jede Greiferschiene 3 eine eigene "Vorschubtraverse" vorgesehen sein könnte, dass aber eine gemeinsame Vorschubtraverse 8 die gegenseitige Führung und Präzision der verschiedenen Bewegungen verbessert.

In allen Ausführungsbeispielen erkennt man, dass die Abtriebswelle 15 der Servomotoren 11 mit der jeweiligen Schwenkachse der Schwenkhebel 9 formschlüssig gekuppelt ist beziehungsweise diese gegebenenfalls einstückig bildet. Somit kann der Antrieb von dem Servomotor 11, insbesondere über ein Zwischengetriebe, direkt auf den zugehörigen Schwenkhebel 9 übertragen werden, was zu einer entsprechend einfachen Konstruktion und zur möglichst weitgehenden Vermeidung von Spiel führt.

Zur Übertragung der Querverstellung der Vorschubtraverse 8 auf die Greiferschienen 3 könnte diese Vorschubtraverse 8 quer zu den Greiferschienen 3 an oder durch diese verlaufende Führungsaussparungen oder Führungsöffnungen durchsetzen. Somit könnten die Greiferschienen bei ihren Öffnungs- und Schließbewegungen in Längsrichtung der Vorschubtraverse quer zu dieser relativ bewegbar sein.

In den Ausführungsbeispielen ist jedoch vorgesehen, dass zur Koppelung der Vorschubtraverse 8 mit den Greiferschienen 3 an der Vorschubtraverse 8 in deren Orientierungsrichtung beispielsweise in Langlochungen verschiebbare Führungsfinger 16 oder dergleichen Vorsprünge angeordnet sind, die sich von der Vorschubtraverse 8 aus in Gegenausnehmungen 17 an den Greiferschienen 3 erstrecken, wobei also die Vorschubtraverse 8 und die Greiferschienen 3 in parallelen Ebenen zueinander angeordnet sind, die durch die Führungsfinger 16 oder dergleichen Vorsprünge überbrückt werden.

In den Figuren 3 und 5 erkennt man, dass die schwenkbaren Hebel 4 zum Bewegen der Greiferschienen 3 in Gebrauchsstellung unterhalb der Greiferschienen 3 und die Vorschubtraverse 8 sowie deren Schwenkhebel 9 oberhalb der Greiferschienen 3 beziehungsweise der von den Greiferschienen 3 aufgespannten Ebene angeordnet sind. Dadurch können die Platzverhältnisse an einer Presse 1 gut berücksichtigt werden.

Wie bereits erwähnt, weisen die die Greiferschienen 3 beaufschlagenden Hebel 4 als Antrieb für ihre Schwenkbewegungen jeweils einen Servomotor 12 und die Schwenkhebel 9 ebenfalls einen Servomotor 11 auf. Dadurch ist es möglich, dass die Servomotoren 12 der schwenkbaren Hebel 4 und der oder die Servomotoren 11 für die Vorschubtraverse 8 eine ihre Schwenkbewegungen insbesondere zeitlich aufeinander abstimmende beziehungsweise koordinierende gemeinsame Steuerung haben können. Somit ergibt sich insgesamt eine sehr einfache Abstimmung und Synchronisation der einzelnen, eingangs beschriebenen Bewegungen der Greiferschienen 3, ohne dass es dafür eines umfangreichen mechanischen Getriebes bedarf.

In vorteilhafter Weise können dabei die Servomotoren 11 und 12 gegebenenfalls von ihren Getrieben abgesehen, baugleich sein. Dies trägt zur Rationalisierung und zur Verminderung von Kosten bei.

Die schwenkbaren Hebel 4 und die Schwenkhebel 9 können dabei jeweils mit ihren schwenkbaren Enden an Gleitsteinen angreifen, die in Langlochungen an den Greiferschienen 3 beziehungsweise an der Vorschubtraverse 8 verschiebbar und geführt eingreifen, um in bekannter Weise aus den Schwenkbewegungen entsprechende geradlinige Bewegungen zu machen.

Die Vorrichtung 1 zum schrittweisen Vorschieben von Werkstücken beispielsweise innerhalb einer Presse 2 mit zwei in Vorschubrichtung hin- und herbewegbaren Greiferschienen 3 weist für die gemeinsame Vorschubbewegung und Rückverstellung der Greiferschienen 3 wenigstens eine quer zu sich selbst verstellbare Vorschubtraverse 8 auf, an welcher zumindest ein von einem Servomotor 11 angetriebener Schwenkhebel 9 angekuppelt ist, dessen Schwenkbewegung in die Querverstellung der Vorschubtraverse 8 und damit in die Vorschub- und Rücklaufbewegung der Greiferschienen 3 umwandelbar ist. Es können auch zwei spiegelsymmetrisch angeordnete Schwenkhebel 9 vorgesehen sein.

## Patentansprüche

1. Vorrichtung (1) zum schrittweisen Vorschieben von Werkstücken mit zwei in Vorschubrichtung hin- und herbewegbaren, Greiferteile oder Greiferbereiche zum Erfassen der Werkstücke aufweisenden Greiferschienen (3), die zum Erfassen der Werkstücke und zum Bewegen in Vorschubrichtung bewegbar sind und anschließend wieder in Ausgangsstellung verstellbar sind, wobei an jeder Greiferschiene (3) wenigstens zwei parallel oder spiegelsynchron zueinander in der Bewegungsebene der Greiferschiene oder einer dazu parallelen Ebene verschwenkbare und zueinander beabstandete Hebel (4) angreifen und wobei diese Hebel (4) der einen Greiferschiene (3) gegensinnig zu denen der anderen Greiferschiene (3) verschwenkbar und jeweils über eine in Orientierungsrichtung der Greiferschienen (3) verlaufende Längsführung (7) mit diesen gekuppelt sind, wobei für die Vorschub- und Rücklaufbewegung an den Greiferschienen (3) außerhalb ihrer Greifbereiche wenigstens eine quer zu sich selbst bewegbare Vorschubtraverse (8) direkt oder indirekt angreift, **dadurch gekennzeichnet, dass** mit der Vorschubtraverse (8) wenigstens ein angetriebener Schwenkhebel (9) verbunden ist, dessen Schwenkbewegung in eine Vorschubbewegung der Vorschubtraverse (8) quer zu sich selbst und damit in eine Vorschubbewegung der Greiferschienen (3) sowie eine jeweilige Rücklaufbewegung umsetzbar ist, wobei die Angriffsstelle des Schwenkhebels (9) an einer in Orientierungsrichtung der Vorschubtraverse (8) verlaufende Längsführung (10) verschiebbar angreift, dass als Antrieb für die Schwenkbewegung des Schwenkhebels (9) ein Servomotor (11) vorgesehen ist, dass Mittel vorgesehen sind, um die Vorschubbewegung der Vorschubtraverse (8) quer oder parallel zu sich selbst zu führen, dass die die Greiferschienen (3) beaufschlagenden Hebel (4) als Antrieb für ihre Schwenkbewegungen jeweils einen Servomotor (12) aufweisen und dass die Servomotoren (12) der schwenkbaren Hebel (4) für die Greiferschienen (3) und des oder der Schwenkhebel (9) für die Vorschubtraverse (8) eine ihre Schwenkbewegungen aufeinander abstimmende gemeinsame Steuerung haben.

2. Vorrichtung nach Anspruch 1, **dadurch gekennzeichnet, dass** zur Führung der Vorschub- und Rücklaufbewegung der Vorschubtraverse (8) quer zu sich selbst zumindest eine mechanische Führung, beispielsweise wenigstens eine Führungsnut, ein Führungsprofil, eine Führungsschiene oder eine Führungstange vorgesehen ist, an der wenigstens ein an der Vorschubtraverse (8) vorhandenes Führungsstück oder Führungselement angreift, oder dass an der Vorschubtraverse (8) zumindest eine quer zu deren Erstreckung und in Orientierungsrichtung der Greiferschienen (3) verlaufende Führung vorgesehen ist, die mit wenigstens einem feststehenden Führungsstück oder Führungselement zusammenwirkt.

3. Vorrichtung nach Anspruch 1 oder 2, **dadurch gekennzeichnet, dass** an der Vorschubtraverse (8) ein mit einem Servomotor (11) angetriebener zweiter Schwenkhebel (9) etwa spiegelsymmetrisch zu dem erstgenannten Schwenkhebel (9) und mit übereinstimmender Abmessung angreift, dessen Schwenkbewegung zusammen mit der des ersten Scwenkhebels (9) in die Vorschub- und Rücklaufbewegung einer jeweiligen oder der gemeinsamen Vorschubtraverse (8) und der Greiferschienen (3) umsetzbar ist, wobei die Angriffsstelle des zweiten Schwenkhebels (9) ebenfalls verschiebbar an einer in Orientierungsrichtung der zugehörigen Vorschubtraverse (8) verlaufenden Längsführung (10) angreift.

4. Vorrichtung nach einem der Ansprüche 1 bis 3, **dadurch gekennzeichnet, dass** die Abtriebswelle (15) des Servomotors (11) mit der Schwenkachse des oder der Schwenkhebel (9) formschlüssig gekuppelt ist oder diese bildet.

5. Vorrichtung nach einem der Ansprüche 1 bis 4, **dadurch gekennzeichnet, dass** die Vorschubtraverse (8) quer zu den Greiferschienen (3) an oder durch diese verlaufende Führungsaussparungen oder Führungsöffnungen durchsetzt und die Greiferschienen (3) bei ihren Öffnungs- und Schließbewegungen in Längsrichtung der Vorschubtraverse (8) quer zu dieser relativ bewegbar sind.

6. Vorrichtung nach einem der Ansprüche 1 bis 5, **dadurch gekennzeichnet, dass** zur Koppelung der Vorschubtraverse (8) mit den Greiferschienen (3) an der Vorschubtraverse (8) in deren Orientierungsrichtung beispielsweise in Langlochungen verschiebbare Führungsfinger (16) oder dergleichen angeordnet sind, die sich von der Vorschubtraverse (8) aus in Gegenausnehmungen (17) der Greiferschienen (3) erstrecken.

7. Vorrichtung nach einem der Ansprüche 1 bis 6, **dadurch gekennzeichnet, dass** die schwenkbaren Hebel (4) zum Bewegen der Greiferschienen (3) ober- und/oder unterhalb der Greiferschienen (3) und die Vorschubtraverse (8) sowie deren Schwenkhebel (9) unter- und/oder oberhalb der Greiferschienen (3) angeordnet sind.

8. Vorrichtung nach Anspruch 1, **dadurch gekennzeichnet, dass** die Servomotoren (12) der schwenkbaren Hebel (4) und der oder die Servomotoren (11) des oder der Schwenkhebel (9) eine zeitlich aufeinander abstimmende gemeinsame Steuerung haben.

9. Vorrichtung nach einem der Ansprüche 1 bis 8, **dadurch gekennzeichnet, dass** die schwenkbaren Hebel (4) und der die Schwenkhebel (9) jeweils mit ihren schwenkbaren Enden an Gleitsteinen angreifen, die in Langlochungen an den Greiferschienen (3) beziehungsweise an der Vorschubtraverse (8) verschiebbar und geführt eingreifen.

## Claims

1. Device (1) for feeding workpieces step by step, with two gripper rails (3) reciprocating in the feed direction and comprising gripper parts or gripper zones for taking hold of the workpieces, which gripper rails (3) are mobile to take hold of the workpieces and to be moved in the feed direction, and which can subsequently be returned to their original position, wherein at least two levers (4) spaced apart and swivelling, in parallel or in mirror synchronism with respect to each other, in the plane of motion of the gripper rail or in a plane in parallel to the same, engage at each gripper rail (3), and wherein these levers (4) of the one gripper rail (3) can be swivelled in a direction opposite to that of the levers (4) of the other gripper rail (3) and are each coupled to the same via a longitudinal guide (7) extending in the direction of orientation of the gripper rails (3), wherein at least one feed traverse (8) which can be moved transversely to its orientation directly or indirectly engages at the gripper rails (3) outside of their gripping zones for the feed and return motions, **characterized in that** at least one driven swivelling lever (9) is connected to the feed traverse (8) the swivel motion of which can be converted into a feed motion of the feed traverse (8) transverse to its orientation and thereby into a feed motion of the gripper rails (3) as well as a respective return motion, wherein the point of engagement of the swivelling lever (9) movably engages at a longitudinal guide (10) extending in the direction of orientation of the feed traverse (8), that a servomotor (11) is provided as a drive for the swivelling motion of the swivelling lever (9), that means are provided to guide the feed motion of the feed traverse (8) transverse to its orientation or in parallel to the same, that the levers (4) acting on the gripper rails (3) comprise, as a drive for their swivelling motions, a servomotor (12) each, and that the servomotors (12) of the swivelling levers (4) for the gripper rails (3) and of the swivelling lever(s) (9) for the feed traverse (8) comprise one common control that matches their swivelling motions.

2. Device according to claim 1 , **characterized in that**, for guiding the feed and return motions of the feed traverse (8) transverse to its orientation, at least one mechanical guide, for example at least one guide groove, one guide profile, one guide rail or one guide bar, is provided, at which at least one guide piece or guide element provided at the feed traverse (8) engages, or that at least one guide extending transversely to the extension of the feed traverse (8) and in the direction of orientation of the gripper rails (3) is provided at the feed traverse (8), the guide cooperating with at least one stationary guide piece or guide element.

3. Device according to claim 1 or 2, **characterized in that** a second swivelling lever (9) driven by a servomotor (11) engages at the feed traverse (8) approximately mirror symmetrically with respect to the first mentioned swivelling lever (9) and with corresponding dimensions, of which the swivelling motion can be converted, together with that of the first swivelling lever (9), into the feed and return motions of a respective or of the common feed traverse (8) and the gripper rails (3), wherein the point of engagement of the second swivelling lever (9) also movably engages at a longitudinal guide (10) extending in the direction of orientation of the associated feed traverse (8).

4. Device according to one of claims 1 to 3, **characterized in that** the driven shaft (15) of the servomotor (11) is positively coupled to the swivel pin of the swivelling lever(s) (9) or forms the same.

5. Device according to one of claims 1 to 4, **characterized in that** the feed traverse (8) penetrates guide recesses or guide openings extending transversely to the gripper rails (3) at or through the same, and that the gripper rails (3) can be relatively moved in the longitudinal direction of the feed traverse (8) transversely to the same during their opening and closing motions.

6. Device according to one of claims 1 to 5, **characterized in that**, for coupling the feed traverse (8) to the gripper rails (3), guide fingers (16) or the like are arranged at the feed traverse (8) which are movable for example in elongated holes in the direction of orientation of the feed traverse (8), and which extend from the feed traverse (8) into counter-recesses (17) of the gripper rails (3).

7. Device according to one of claims 1 to 6, **characterized in that** the swivelling levers (4) for moving the gripper rails (3) are arranged above and/or underneath the gripper rails (3) and that the feed traverse (8) as well as its swivelling levers (9) are arranged underneath and/or above the gripper rails (3).

8. Device according to claim 1, **characterized in that** the servomotors (12) of the swivelling levers (4) and the servomotor(s) (11) of the swivelling lever(s) (9) comprise one common timing control.

9. Device according to one of claims 1 to 8, **characterized in that** the swivelling levers (4) and the swivelling lever(s) (9) each engage with their swivelling ends at sliding pads which engage in elongated holes at the gripper rails (3) or at the feed traverse (8) so as to be movable and guided.

## Revendications

1. Dispositif (1) servant au déplacement pas à pas de pièces à usiner possédant des rails de préhension (3) présentant deux éléments de préhension qui peuvent aller et venir ou des zones de préhension destinés à saisir les pièces à usiner, montés mobiles pour saisir les pièces à usiner et pour les déplacer dans le sens d'avancée et pouvant ensuite être replacées dans leur position de départ, au moins deux leviers (4) orientables et espacés parallèles ou symétriquement en regard dans le plan de déplacement du rail de préhension ou dans un plan y étant parallèle venant en contact avec chaque rail de préhension (3) et ces leviers (4) d'un rail de préhension (3) étant orientables dans le sens inverse des leviers de l'autre rail de préhension (3) et étant chacun couplés à ceux-ci par un guidage longitudinal (7) s'étendant dans le sens d'orientation des rails de préhension (3), au moins une traverse d'avancée mobile transversalement à elle-même (8) venant en contact directement ou indirectement avec les rails de préhension (3) pour le mouvement d'avancée et de recul en dehors de leurs zones de préhension, **caractérisé par le fait qu'**au moins un levier pivotant (9) entraîné est relié à la traverse d'avancée (8), dont le pivotement peut être mis en oeuvre dans un mouvement d'avancée de la traverse d'avancée (8) transversalement à elle-même et ainsi dans un mouvement d'avancée des rails de préhension (3) ainsi que dans un mouvement de recul correspondant, le point d'attaque du levier pivotant (9) venant coulissant en contact avec un guidage longitudinal (10) s'étendant dans le sens d'orientation de la traverse d'avancée (8), qu'un servomoteur (11) est prévu en tant qu'entraînement pour le pivotement du levier pivotant (9), que des moyens sont prévus pour guider le mouvement d'avancée de la traverse d'avancée (8) transversalement ou parallèlement à elle-même, que les leviers (4) sollicitant les rails de préhension (3) en tant qu'entraînement pour leurs pivotements présentent chacun un servomoteur (12) et que les servomoteurs (12) des leviers orientables (4) pour les rails de préhension (3) et du ou des leviers pivotants (9) pour la traverse d'avancée (8) disposent d'une commande commune de coordination temporelle.

2. Dispositif selon la revendication 1, **caractérisé par le fait que** pour le guidage du mouvement d'avancée ou de recul d'une traverse d'avancée (8) transversalement à elle-même est prévu au moins un guidage mécanique, par exemple au moins une rainure de guidage, un profil de guidage, un rail de guidage ou une tige de guidage, avec lequel vient en contact au moins une pièce de guidage ou un élément de guidage disponible sur la traverse d'avancée (8), ou que sur la traverse d'avancée (8) est prévue au moins un guidage s'étendant transversalement à son extension et dans le sens d'orientation des rails de préhension (3), qui coopère avec au moins une pièce de guidage ou un élément de guidage fixe.

3. Dispositif selon la revendication 1 ou 2, **caractérisé par le fait qu'**un second levier pivotant (9) entraîné par un servomoteur (11) vient en contact avec la traverse d'avancée (8) approximativement symétriquement en regard du premier levier pivotant (9) mentionné et avec une dimension concordante, dont le pivotement conjointement avec celui du premier levier pivotant (9) peut être mis en oeuvre dans le mouvement d'avancée ou de recul d'une traverse d'avancée propre ou commune (8) et des rails de préhension (3), le point d'attaque du second levier pivotant (9) venant également coulissant en contact avec un guidage longitudinal (10) s'étendant dans le sens d'orientation de la traverse d'avancée (8) correspondante.

4. Dispositif selon l'une quelconque des revendications 1 à 3, **caractérisé par le fait que** l'arbre de sortie (15) du servomoteur (11) est couplé par liaison de forme à l'axe de pivotement du ou des leviers pivotants (9) ou forme celui-ci.

5. Dispositif selon l'une quelconque des revendications 1 à 4, **caractérisé par le fait que** la traverse d'avancée (8) traverse transversalement aux rails de préhension (3) des encoches de guidage ou ouvertures de guidage s'étendant le long ou à travers ces rails et que les rails de préhension (3) sont relativement mobiles transversalement à la traverse d'avancée lors de leurs mouvements d'ouverture et de fermeture dans le sens longitudinal de la traverse d'avancée (8).

6. Dispositif selon l'une quelconque des revendications 1 à 5, **caractérisé par le fait que** des jetées de guidage montées coulissantes (16) ou similaires sont disposées sur la traverse d'avancée (8) dans son sens d'orientation, par exemple dans des perforations oblongues, pour coupler la traverse d'avancée (8) aux rails de préhension (3), ces jetées de guidage s'étendant de la traverse d'avancée (8) jusqu'à des évidements opposés (17) des rails de préhension (3).

7. Dispositif selon l'une quelconque des revendications 1 à 6, **caractérisé par le fait que** les leviers orientables (4) prévus pour déplacer les rails de préhension (3) sont disposés au-dessus ou en dessous des rails de préhension (3) et que la traverse d'avancée (8) ainsi que son levier pivotant (9) sont disposés au-dessus et en dessous des rails de préhension (3).

8. Dispositif selon la revendication 1, **caractérisé par le fait que** les servomoteurs (12) des leviers orientables (4) et le ou les servomoteurs (11) du ou des leviers pivotants (9) ont une commande commune de coordination temporelle.

9. Dispositif selon l'une quelconque des revendications 1 à 8, **caractérisé par le fait que** les leviers orientables (4) et les leviers pivotants (9) viennent respectivement en contact avec les coulisseaux à l'aide de leurs extrémités orientables, qui s'engagent montées coulissantes et guidées dans des perforations oblongues sur les rails de préhension (3) ou sur la traverse d'avancée (8).
